# EUROPEAN PATENT SPECIFICATION

(11) **EP 3 641 606 B1**
(45) Date of publication and mention of the grant of the patent: **17.01.2024**
(21) Application number: 18821308.6
(22) Date of filing: 19.06.2018
(51) Int. Cl.: A47J 37/04

(54) **GASTRONOMY ROLLER HEATER**
ROLLERHITZER FÜR DIE GASTRONOMIE
DISPOSITIF DE CHAUFFAGE À ROULEAU POUR RESTAURATION

(30) Priority: 20.06.2017 PL 42196017
(43) Date of publication of application: 29.04.2020
(73) Proprietor: Wadolowski Dariusz Przedsiebiorstwo Wielobranzowe Gastronet, 12-200 Pisz (PL)
(72) Inventor: WADOLOWSKI Dariusz, PL-12-200 Pisz (PL)
(74) Representative: Piatkowska, Elzbieta
(86) International application number: PCT/PL2018/000063
(87) International publication number: WO 2018/236234

(56) References cited:
- US-A1- 2009 114 638
- US-A1- 2014 033 929
- US-A1- 2017 156 545
- US-B1- 9 439 535

## Description

The subject of the invention is a gastronomy roller heater used for cured meat products mainly for the purposes of small gastronomy.

Already established are hot dog heaters equipped with rotating heating rolls inside of which heaters are mounted. The heaters are equipped with a thermostat and a control lamp. The heated cured meat products are usually wieners or kabanos sausages for hot dogs and the heater allows the simultaneous heating of from a few to a dozen or even several dozen of such sausages. During the sale of hot dogs it is impossible to predict the quantity and types of sausages that will be ordered by the customers. This causes a situation in which some sausages are heated for a long time while others are heated on a regular basis. This requires the observation of the device and paying special attention to the heated products which, in the case of selling hot dogs at petrol stations, for example, where the staff provides various sale services under time pressure, can lead to the issue of selling hot dogs with insufficiently heated sausages.

There is known roller grill, the patent US20170156545A1. A roller grill for hot dogs and other comestibles possessing a cabinet having an array of rotationally driven heat tubes, each with an outer surface heated by an internal heating element. Mounting plates at sides of the roller grill are configured to support a plurality of axles that are adapted to mate with a gear at distal ends of each heat tube. The gears of the heat tubes are held in parallel alignment by the axles, and are driven by one or more idler gears and one or more drive gears powered by one or more motors. Disposed between an output shaft of the motor and a drive gear, is a slip clutch that disengages power to the drive gear and thereby pauses rotation of the heat tubes if enough rotational resistance is encountered. Heat containment panels with a curvature on an uppermost portion are mountable to sides of the roller grill to reduce heat loss from the peripheral rows of heat tubes and thereby stabilize the temperature gradient of the heat tube array.

US 9439535B1 disclosures of roller tube grill temperature control assemblies and methods for human food have a sensing device to fit between a pair of tubes with sides that conform to the tube surface, and an associated temperature-sensing component for detecting the sensing device temperature. An electrical control arrangement in electrical connection with a heating element disposed within a tube can control electricity, with mechanisms to modify the set point. A biasing member biases the sensing device. Such device can also have on or more tube receiving inner openings located between the sides of the device. The sensing device can further be a bushing with one or more generally cylindrical openings to receive roller tube or tubes. The assembly moreover can have an infrared sensing device associated with a tube to sense radiation therefrom for detecting temperature.

US20090114638A1 disclosures Apparatus and method for effectuating temperature control in roller grills. invention provides an apparatus and method for effectuating temperature control in roller grill assembly. Some embodiments provide a roller grill assembly which provides enhanced measurement by utilizing temperature probes located in convective air streams generated in the roller tube. Certain embodiments also provide an improved method for maintaining of a food product temperature by utilizing an intermediate holding mode. Finally, certain embodiments provide improved current control by limiting the number of heating circuits of a food heater that may be simultaneously enabled such that the current draw does not exceed a maximum current draw.

Another roller heater according to the preamble of claim 1 is disclosed in US2014033929A1.

According to current invention the gastronomy roller heater having a cuboid base fitted with a socket for connecting the electric current, and equipped from the front with a thermostat, a power switch and an operating indicator over which, between the side walls, rotating heating rollers are mounted, is characterized by the fact that the upper parts of the side walls are formed in the shape of an eaves being fitted with noncontact temperature sensors being directed at the inter-rows of heating rollers, and on the upper surface of the side walls there are temperature displays mounted presenting the temperature measured by individual noncontact temperature sensors.

Beneficially the temperature sensors are non-contact infrared sensors.

The sausages rotate in the inter-rows of the rotating rolls, and the displays indicate temperature measured with temperature sensors. The sensors are directed at the inter-rows of the rollers, that is at the places where the heated sausages are located. By using the solution of this invention, it is possible to monitor the temperature of the heated sausages on an ongoing basis, which allows the proper quality of the served hot-dogs as well as meeting the terms of food safety requirements, ensuring the protection of human health and consumer interests.

The invention is explained in greater detail in the exemplary embodiment drawing which shows the device in perspective view from the front.

The gastronomy roller heater has a cuboid stainless steel base fitted with a socket for connecting the electric current, is equipped from the front with a thermostat 6, a power switch 7 and an operating indicator 8. Above the base, between the side walls 1, rotating heating rollers 4 are mounted. The upper parts of the side walls 1 are formed in the shape of an eaves 2 being fitted with non-contact temperature sensors 3. Temperature sensors 3 are directed at the inter-rows of the rollers 4. On the upper side of the side walls 1 temperature displays 5 showing the temperature measured by individual temperature sensors 3 are placed. The temperature of each of the sausages heated in the inter-rows is presented on the corresponding temperature display.

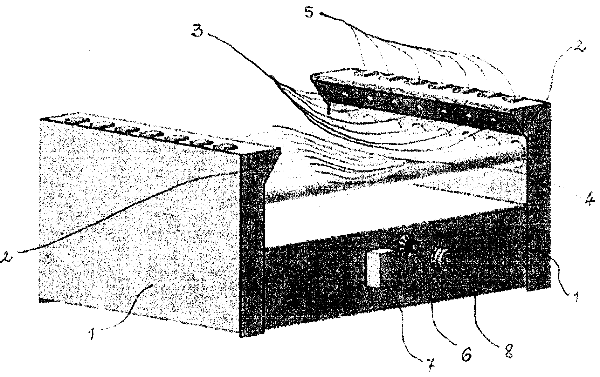

## Claims

1. The gastronomy roller heater, having a cuboid base fitted with a socket for connecting electric current, and equipped from the front with a thermostat, a power switch and an operating indicator, over which, between the side walls, rotating heating rollers are mounted, is **characterized by** the fact that the upper parts of the side walls (1) are formed in the shape of an eaves (2) being fitted with noncontact temperature sensors (3) being directed at the inter-rows of heating rollers, (4), and on the upper surface of the side walls (1) there are temperature displays (5) mounted presenting the temperature measured by individual noncontact temperature sensors (3).

2. The heater in accordance with claim 1. is **characterized by** the fact that the noncontact temperature sensors (3) are non-contact infrared sensors.

## Patentansprüche

1. Rollenofen für die Gastronomie, umfassend einen quaderförmigen, mit einer Steckdose für den Anschluss von elektrischem Strom versehenen Sockel, der an der Vorderseite mit einem Thermostat, einem Netzschalter und einem Betriebsanzeiger ausgestattet ist und über dem zwischen den Seitenwänden rotierende Heizrollen angeordnet sind, **dadurch gekennzeichnet, dass** die oberen Teile der Seitenwände (1) in Form einer mit berührungslosen Temperatursensoren (3) bestückten Lüftungshaube (2) ausgebildet sind, wobei die Temperatursensoren (3) auf die Zwischenreihen der Heizrollen (4) gerichtet sind, wobei an der Oberseite der Seitenwände (1) Temperaturanzeigen (5) angebracht sind, welche die von den einzelnen berührungslosen Temperatursensoren (3) gemessene Temperatur anzeigen.

2. Ofen nach Anspruch 1, **dadurch gekennzeichnet, dass** die berührungslosen Temperatursensoren (3) berührungslose Infrarotsensoren sind.

## Revendications

1. Réchauffeur à rouleaux pour la gastronomie, comportant une base, en forme de parallélépipède droit, dotée d'une prise destinée à la connexion du courant électrique, et équipée, sur la face avant, d'un thermostat, d'un interrupteur d'alimentation et d'un indicateur de fonctionnement, sur laquelle, entre les parois latérales, sont montés des rouleaux chauffants rotatifs, est **caractérisé par le fait que** les parties supérieures des parois latérales (1) sont conçues sous la forme d'un capot (2) doté des capteurs de température (3) sans contact étant dirigés vers les inter-rangées des rouleaux chauffants (4), et sur la surface supérieure des parois latérales (1) sont montés des affichages de température (5) présentant la température mesurée par les capteurs de température (3) sans contact individuels.

2. Réchauffeur selon la revendication 1, **caractérisé par le fait que** les capteurs de température (3) sans contact sont des capteurs infrarouges sans contact.
